(19) Europäisches Patentamt / European Patent Office / Office européen des brevets

(11) **EP 4 222 297 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **21783509.9**

(22) Anmeldetag: **28.09.2021**

(51) Internationale Patentklassifikation (IPC):
**D02G 3/40** *(2006.01)*  **B29B 15/12** *(2006.01)*

(52) Gemeinsame Patentklassifikation (CPC):
**B29B 15/122; B29B 15/125; B29B 15/127; D02G 3/40**

(86) Internationale Anmeldenummer:
**PCT/EP2021/076647**

(87) Internationale Veröffentlichungsnummer:
**WO 2022/069471 (07.04.2022 Gazette 2022/14)**

(54) **HAFTFÄHIGES BÄNDCHENGARN**

ADHESIVE TAPE YARN

FIL EN FORME DE RUBAN ADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 EP 20198959**

(43) Veröffentlichungstag der Anmeldung:
**09.08.2023 Patentblatt 2023/32**

(73) Patentinhaber: **PHP Fibers GmbH**
**63784 Obernburg (DE)**

(72) Erfinder:
• **FLACHENECKER, Andreas**
**45276 ESSEN (DE)**
• **VIETH, Christian**
**63939 WÖRTH (DE)**
• **SIEJAK, Volker**
**47259 DUISBURG (DE)**
• **HEHN, Daniel**
**97230 ESTENFELD (DE)**

(74) Vertreter: **CPW GmbH**
**Kasinostraße 19-21**
**42103 Wuppertal (DE)**

(56) Entgegenhaltungen:
**EP-A2- 0 330 980**  **WO-A1-2013/117728**
**WO-A1-2020/132663**  **GB-A- 868 954**
**JP-A- 2003 002 990**  **US-A- 3 461 025**

**Beschreibung**

Die Erfindung betrifft ein Bändchengarn, das als Rohmaterial für textile Verstärkungen in technischen Produkten wie z.B. Faserverbundwerkstoffen, Fahrzeugreifen oder zur Herstellung von Geweben insbesondere für flexible Gebilde wie z.B. Airbags verwendet werden kann.

Bändchengarne bestehen typischerweise aus Multifilamentgarnen, die so gespreizt sind, dass die Einzelfilamente vorzugsweise nebeneinander verlaufen und somit einen Filamentzug bilden, dessen Querschnitt nicht rund, sondern abgeflacht ist. Typische Bändchengarne weisen die Form von Bändern, vergleichbar zum Beispiel Tonband oder Klebeband auf. Der Filamentzug wird in der Regel durch Bindermaterial, das dem Fachmann auch als Matrixmaterial oder Fixiermittel bekannt ist, und mit dem das Multifilamentgarn imprägniert wird, in Form gehalten.

Bändchengarne zeichnen sich dadurch aus, dass sie einen nicht runden Garnquerschnitt aufweisen. In einer Ausführungsform weist der Garnquerschnitt des Bändchengarns zwei zueinander parallele Seiten auf. In einer Ausführungsform ist der Garnquerschnitt des Bändchengarns rechteckig. In einer Ausführung ist der Garnquerschnitt des Bändchengarns trapezförmig. In einer Ausführungsform hat der Garnquerschnitt des Bändchengarns die Form eines abgeflachten Ovals mit zwei parallelen Seiten und abgerundeten Kanten. In einer Ausführungsform hat der Garnquerschnitt des Bändchengarns die Form einer Ellipse.

Bändchengarne werden üblicherweise nach dem Versehen mit dem Bindermaterial aufgespult und in Form von Rollen, deren Gewicht bis zu 15 kg betragen kann und die einen Bändchengarnstrang bis zu 100 km Länge enthalten können, gelagert und transportiert. Den Bändchengarnen des Standes der Technik ist zueigen, dass sie beim Auf- und Abspulen aber auch bei Erschütterungen einer gelagerten Rolle leicht auf der Rolle verrutschen können. Verrutschte Bändchengarne können den Auf- und Abspulvorgang massiv behindern und darüber hinaus zum Verknoten, Verheddern oder Reißen des Garns führen. Nicht zuletzt ist der wirtschaftliche Schaden durch Verrutschen von Bändchengarnen auf der Rolle oder beim Auf- und Abspulen immens, weil Teile des Bändchengarns nicht mehr verwendbar sind und verworfen werden müssen. Außerdem bedeuten die Behinderungen durch abgerutschte, verknotete oder verhedderte Bändchengarne jeweils den Stop des Produktions- oder Verarbeitungsprozesses und somit weitere ökonomische Einbußen.

Ein Bändchengarn gemäß dem Oberbegriff des Anspruchs 1 ist in WO-A-2013/117728 beschrieben worden. US-A-3 461 025, JP-A-2003 002990, EP-A-0 330 980, GB-A-868 954 und WO-A-2020/132663 offenbaren Faserrovings, die mit einem thermisch härtbaren Harz versehen sind und eine klebrige Oberfläche aufweisen.

Aufgabe der Erfindung ist es daher, ein Bändchengarn bereit zu stellen, das weder beim Auf- und Abspulen noch beim Transport oder bei der Lagerung in Rollenform verrutschen kann.

Die Aufgabe wird gelöst durch ein Bändchengarn aufweisend eine Oberseite und eine Unterseite, Filamente, sowie ein Bindermaterial, wobei das Bindermaterial zu einem wesentlichen Anteil thermoplastische Polymere enthält, wobei die Ober- und/oder die Unterseite des Bändchengarns Bindermaterial enthält und wobei das Bindermaterial die Filamente aneinander bindet, gekennzeichnet dadurch, dass die Oberseite und/oder die Unterseite des Bändchengarns einen Haftklebstoff aufweist.

Durch Aufspreizen der Filamente kann die Verteilung des Bindermaterials verbessert werden, wodurch es zu einer deutlich besseren Imprägnierung kommt, auch wenn keine anschließende Druckbehandlung erfolgt.

Im Sinne der vorliegenden Anmeldung wird unter "Imprägnierung" jedweder Vorgang verstanden, bei dem ein Material in ein anderes, Poren oder Zwischenräume aufweisendes Material eingebracht wird.

Filamente im Sinne der vorliegenden Anmeldung sind Gebilde, deren Länge ein Vielfaches ihrer Dicke beträgt. Damit können unter dem Begriff "Filamente" alle Arten von Fasern verstanden werden. Insbesondere werden unter Filamenten aber Fasern von besonders großer Länge verstanden. Ein typisches Filament hat eine Länge von einem Meter oder mehr, die Länge kann aber auch etliche hundert und sogar etliche tausend Meter betragen.

In einer Ausführungsform bestehen die Filamente zu einem wesentlichen Anteil aus thermoplastischen Polymeren wie Polyamiden, Polyestern, Polyolefinen oder Mischungen daraus.

Unter Polyamiden werden sämtliche Polymere verstanden, in denen die Monomereinheiten durch Amidbindungen verbunden sind. Darunter fallen insbesondere Polykondensationsprodukte aus aliphatischen Diaminen wie Hexamethylendiamin, Pentamethylendiamin oder Tetramethylendiamin und aliphatischen Diacarbonsären wie Adipinsäure, Sebacinsäure, Azelainsäure oder Dodecansäure. Weiterhin werden unter Polyamiden auch Polykondensationsprodukte von aromatischen Dicarbonsäuren wie Terephthalsäure, Isophthalsäure oder Phthalsäure mit den bereits genannten aliphatischen Diaminen (Polyphthalamide) oder auch mit aromatischen Diaminen wie Paraphenylendiamin (Aramide) verstanden. Da in den bislang genannten Polyamiden die Monomere entweder zwei Amino- oder zwei Säuregruppen enthalten, werden sie auch als "Polyamide vom AA-SS-Typ" bezeichnet. Weiterhin werden unter Polyamiden auch Polykondensationsprodukte aus Aminocarbonsäuren wie 11-Aminoundecansäure oder aus Lactamen wie ε-Caprolactam oder Laurinlactam verstanden. Da in dieser Art von Polyamiden Monomere vorliegen, die sowohl Säure- als auch Aminogruppen enthalten, werden sie auch als "Polyamide vom AS-Typ" bezeichnet. Unter "Copolyamiden" im Sinne der vorliegenden Anmeldung werden entweder Polyamide vom AA-SS-Typ verstanden, die zwei oder mehr Aminokomponenten und/oder zwei oder mehr Säurekomponenten aufweisen oder aber Polyamide vom AS-Typ, die zwei oder mehr verschiedene Monomerkomponenten mit Säure- und Aminogruppe aufweisen.

Unter Polyester werden sämtliche Polymere verstanden, in denen die Monomereinheiten durch Esterbindungen verbunden sind. Darunter fallen insbesondere Polykondensationsprodukte aus aliphatischen Diolen wie Ethylenglycol, Trimethylenglycol oder 1,4-Butandiol und aromatischen Diacarbonsären wie Terephthalsäure, Isophthalsäure oder Phthalsäure. Weiterhin werden unter Polyestern auch Polykondensationsprodukte aus Hydroxycarbonsäuren wie Milchsäure oder aus Lactonen wie ε-Caprolacton verstanden. Unter "Copolyestern" im Sinne der vorliegenden Anmeldung werden entweder Polyester verstanden, die zwei oder mehr Diolkomponenten und/oder zwei oder mehr Disäurekomponenten aufweisen oder aber Polyester, die zwei oder mehr verschiedene Monomerkomponenten mit einer Säure- und einer Aminogruppe aufweisen.

Im Sinne der vorliegenden Anmeldung werden unter "Polyolefinen" sämtliche Polymere verstanden, die im Wesentlichen durch Polymerisation von einfach ungesättigten Kohlenwasserstoffen, insbesondere von Ethen, Propen oder Buten, erhalten werden.

In einer Ausführungsform bestehen die Filamente zu einem wesentlichen Anteil aus anorganischen Fasern wie Glasfasern, Basaltfasern, Kohlenstofffasern oder Metalldrähten.

In einer Ausführungsform bestehen die Filamente zu einem wesentlichlichen Anteil aus zellstoffbasierten Cellulosefasern wie Viscose, Lyocell, Cupro oder mit Hilfe ionischer Flüssigkeiten hergestellter zellstoffbasierter Cellulosefasern.

In einer Ausführungsform bestehen die Filamente des Bändchengarns entsprechend der Anmeldung aus unterschiedlichen Materialien wie zum Beispiel einer Mischung aus thermoplastischen und anorganischen Fasern wie zum Beispiel Polyamid-6 und Glasfaser, Polyamid-6,6 und Glasfaser, Polyamid-6 und Aramid oder Polyamid-6 und Kohlenstofffasern. Dabei können die Filamente aus unterschiedlichen Materialien vermischt sein oder in verschiedenen Lagen vorliegen. Derartige Bändchengarne sind dem Fachmann unter der Bezeichnung "Hybridrovings" bekannt. Entsprechende Materialien sind in den Europäischen Patentanmeldungen EP2812471 und EP3092112 beschrieben. In der vorliegenden Anwendung wird der Begriff "Hybridroving" unter dem dem Begriff "Bändchengarn" subsummiert.

In der vorliegenden Anmeldung wird unter dem Begriff "Bindermaterial" die Gesamtheit des festen nicht faserförmigen Materials verstanden, die sich zwischen den Filamenten des Bändchengarns befindet. Erfindungsgemäß handelt es sich bei dem Bindermaterial um ein thermoplastisches Polymer. In einer Ausführungsform basiert das Bindermaterial auf einem thermoplastischen Copolyamid. In einer Ausführungsform kann der Schmelzpunkt des thermoplastischen Copolyamids 120°C bis 150°C betragen. In einer weiteren Ausführungsform kann es sich bei dem Bindermaterial um thermoplastischen Copolyester handeln. In einer Ausführungsform kann es sich bei dem Bindermaterial um Polyolefine oder funktionalisierte Polyolefine wie zum Beispiel ein Polypropylen-Maleinsäureanhydrid-Pfropfpolymer handeln. In einer Ausführungsform kann es sich bei dem Bindermaterial zum Beispiel basierend auf Polysiloxanen, handeln. Besonders gut eignen sich dafür Polysiloxane, die in der Hauptkette bzw. in den Seitenketten Vinylgruppen enthalten. In einer Ausführungsform hat das Bindermaterial elastomere Eigenschaften. Im Sinne der vorliegenden Erfindung wird unter "basieren" der Umstand verstanden, dass das Bindermaterial den entsprechenden Stoff zu einem wesentlichen Anteil enthält und der entsprechende Stoff auch einen wesentlichen Anteil zur Funktion des Bindermaterials, nämlich dem Binden der Einzelfilamente des Bändchengarns aneinander, beiträgt. Unter einem wesentlichen Anteil im Sinne der vorliegenden Anmeldung wird verstanden, dass das entsprechende Material mindestens 50 Gew.-% des Bindermaterials ausmacht.

Darüber hinaus kann das Bindermaterial weitere Komponenten enthalten, wie beispielsweise Weichmacher, Farbstoffe, Pigmente, Haftklebstoffe, Antistatikmittel, UV-Inhibitoren oder Antioxidantien.

Das Bindermaterial kann in unterschiedlichen Formen in das Bändchengarn eingebracht werden. Insbesondere können gespreizte Filamentzüge durch Tränken aus Lösungen, Schmelzen oder Emulsionen mit dem Bindermaterial versehen werden. Ebenso ist eine Imprägnierung durch Sprühen möglich.

Unter einem Haftklebstoff werden in der vorliegenden Anmeldung Materialien verstanden, die eine hohe Anfassklebkraft (dem Fachmann auch unter der Bezeichnung "Tack" bekannt) aufweisen, die also in sehr kurzer Zeit Klebeverbindungen mit Gegenständen eingehen, die das betreffende Material berühren. Im Sinne der vorliegenden Anmeldung nicht gewünscht ist eine starke Adhäsion, also ein starkes, dauerhaftes Haften des den Haftklebstoff berührenden Gegenstandes. Unter einem Haftklebstoff im Sinne der vorliegenden Anmeldung werden ausdrücklich auch solche Klebstoffe verstanden, die ihre Anfassklebkraft im Laufe der Zeit (z.B. durch Verdunsten des Lösungs- oder Dispergiermittels) verlieren.

Mögliche Haftklebstoffe sind Polymere oder Copolymere auf Basis von Acrylaten, namentlich auf Basis von 2-Ethylhexlacrylat, Isoamylacrylat, Hydroxymethacrylat, Isooctylacrylat, Acrylsäure, Methylmethacrylat oder Butylacrylat. Die als Haftklebstoff verwendeten Polymere oder Copolymere können darüber hinaus auch Styrol, Naturkautschuk, Polyterpenharz, Polyisopren Styrol-Butadien-Kautschuk, Styrol-Butadien-Kautschuk, Isobuten-Isoprenkautschuk, Acrylnitril-Butadienkautschuk, Chloroprenkautschuk, Polyvinylacetat oder Polydiphenyldisiloxan enthalten. In einer Ausführungsform enthält der Haftklebstoff quellbare Acrylatkügelchen. In einer Ausführungsform enthält der Haftklebstoff ein Lösungs- oder Quellmittel wie Wasser, einen Alkohol wie Ethanol, Methanol, 1-Propanol oder 2-Propanol, ein Keton wie Aceton oder Methylethylketon oder ein Alkan wie n-Hexan, n-Heptan oder Petrolether. In einer Ausführungsform behält die als Haftklebstoff zugesetzte Komponente auch nach einer Wärmebehandlung des Bändchengarns bei beispielsweise 180°C ihre Klebkraft. In einer Ausführungsform ist der Haftklebstoff so beschaffen, dass er seine klebrige Eigenschaft im Laufe der Zeit, zum Beispiel durch die Einwirkung von Licht, Luftsauerstoff oder durch das Verdampfen eines Lösungs- oder Quellmittels wieder verliert.

In einer Ausführungsform werden Menge und Art des Haftklebstoffs so gewählt, dass sich die dadurch entstehende Klebeverbindung durch Einwirkung einer Kraft von circa 0,01 mN/tex wieder lösen lässt. Circa bedeutet in diesem Zusammenhang eine Abweichung nach oben und unten von je 50%. Hierdurch kann sowohl der Ansatz des Bändchengarns an einen Spulenkern als auch der Zusammenhalt des aufgespulten Bändchengarns auf der Rolle entscheidend verbessert werden. Gleichzeitig wird weder das Abspulen noch die Verarbeitbarkeit des Bändchengarns wesentlich eingeschränkt.

Auf diese Weise ist gewährleistet, dass die Klebkraft in der Lage ist, die Gewichtskraft eines einen Meter langen Stückes eines Bändchengarnes mit einer Feinheit von x tex zu halten, wie folgende Rechnung verdeutlichen mag:

Ein Meter eines Garnes mit einer Feinheit von *x tex* hat eine Masse von $\frac{x}{1000}g$ und dementsprechend eine Gewichtskraft von $\frac{9,81x}{1000}mN$, was $0,00981 \frac{mN}{tex}$ entspricht und aufgerundet $0,01 \frac{mN}{tex}$.

In einer Ausführungsform enthält das Bindermaterial den Haftklebstoff als Komponente.

In einer Ausführungsform wird das Bindermaterial so gewählt, dass es sich beim Bindermaterial insgesamt um einen Haftklebstoff handelt. Bei dem Bindermaterial kann es sich in dieser Ausführungsform um ein Polymer oder Copolymer auf Acrylatbasis handeln. Mögliche Monomere sind dabei 2-Ethylhexlacrylat, Isoamylacrylat, Hydroxymethacrylat, Isooctylacrylat, Acrylsäure, Methylmethacrylat, oder Butylacrylat. Das Bindermaterial kann quellbare Acrylatkügelchen enthalten. Weiterhin kann es sich bei dem Bindermaterial auch um ein Material auf Basis von Kautschuken wie Naturkautschuk, Polyisopren, Polyterpenharz, Styrol-Butadien-Kautschuk, Isobuten-Isoprenkautschuk, Acrylnitril-Butadienkautschuk oder Chloroprenkautschuk handeln. Darüber hinaus ist auch ein Bindermaterial auf Basis von Polyvinylacetat oder Polydiphenyldisiloxan denkbar.

Das Bindermaterial kann so beschaffen sein, dass es durch Befeuchten und/oder Aktivieren mit einem Lösungsmittel wie Wasser, einem Alkohol wie Ethanol, Methanol, 1-Propanol, 2-Propanol, einem Keton wie Aceton oder Methylethylketon, einem Alkan wie n-Hexan, n-Heptan oder Petrolether dauerhaft oder vorübergehend die Eigenschaft eines Haftklebstoffs annimmt.

In einer Ausführungsform bildet der Haftklebstoff auf dem Bändchengarn mindestens eine Lage. In weiteren Ausführungsformen sind auch zwei oder mehr Lagen möglich, die auf unterschiedlichen Seiten des Bändchengarns und/oder direkt übereinander liegen können.

In einer Ausführungsform liegt der Haftklebstoff auf der Ober- und/oder der Unterseite des Bändchengarns vor. Der Haftklebstoff kann auf der Oberfläche des Bändchengarns sowohl in Form einer geschlossenen Schicht als auch in Form kontinuierlicher oder diskontinuierlicher Muster wie z.B. in Form von Streifen, Punkten oder anderen geometrischen Formen vorliegen.

In einer weiteren Ausführungsform kann das Bändchengarn komplett mit dem Haftklebstoff durchtränkt sein.

Der Haftklebstoff verhindert nicht nur ein Verrutschen des Bändchengarns beim Transportieren und/oder Lagern auf der Spule, sondern auch beim Auf- und/oder Abspulen.

In einer Ausführungsform kann das erfindungsgemäße Bändchengarn zwei oder mehr Lagen von Filamenten enthalten. In einer Ausführungsform enthalten die zwei oder mehr Lagen von Filamenten Filamente aus unterschiedlichen Materialien, wobei sich Lagen von Filamenten nicht durchdringen. In einer Ausführungsform können so mehrlagige Bändchengarne hergestellt werden, die z.B. zwei Lagen Filamente aus Polyolefin, Polyester oder Polyamid enthalten, zwischen denen eine Lage von Filamenten aus Glasfasern, Metalldrähten, Basaltfasern, Kohlenstofffasern oder aromatischen Polyamidfasern eingebettet sind. In einer weiteren Ausführungsform können Filamente aus unterschiedlichen Materialien wie zum Beispiel Glasfaser und Polyamid-6 oder Glasfaser und Polypropylen in einer gemeinsamen Lage in dem Bändchengarn enthalten sein. Bändchengarne, die Filamente aus unterschiedlichen Materialien enthalten, sind dem Fachmann auch als "Hybridrovings" bekannt.

In einer Ausführungsform wird das erfindungsgemäße Bändchengarn nach dem Aufspulen als Schutz vor unerwünschten Partikeln wie Staub, die durch die Haftfähigkeit des Bändchengarns besonders gut haften, in eine Kunststofffolie verpackt. In einer Ausführungsform handelt es sich bei der Kunststofffolie um eine Polyethylenfolie. In einer Ausführungsform handelt es sich bei der Kunststofffolie um eine mehrlagige Polyethylenfolie. In einer Ausführungsform handelt es sich bei der Kunststofffolie um eine mehrlagige Polyethylenfolie, die auf der Innenseite mit einem Haftklebstoff versehen ist oder deren Innenseite aufgrund ihrer Materialzusammensetzung klebrig ist, während die Außenseite glatt ist wobei es sich bei der Innenseite um die dem aufgespulten Bändchengarn zugewandte Seite der Polyethylenfolie handelt. Einer Ausführungsform handelt es sich um eine Kunststofffolie, die ihre Form bewahrt und gleichzeitig ein Herabfallen der anliegenden Bändchengarnlagen, die jedoch dessen vollständiges Abarbeiten nicht einschränkt. Dies ist insbesondere dann der Fall, wenn die in die Folie verpackte Spule von innen abgezogen wird.

Um diese Anforderungen zu erfüllen, ist es von Vorteil, wenn die Haftkraft des erfindungsgemäßen Bändchengarns so eingestellt wird, dass sie geringer ist als die Kraft, mit der das Garn von der Spule abgezogen wird.

Die Anmeldung betrifft außerdem ein Verfahren zur Herstellung eines Bändchengarns beinhaltend die Schritte: Vorlegen von parallel angeordneten Filamenten, bandförmiges Anordnen und Fixieren durch Aufbringen eines oder mehrerer thermoplastischer Bindermaterialien sowie anschließendes Aufwickeln des Garns, gekennzeichnet dadurch, dass auf der Ober- und/oder der Unterseite des Bändchengarns ein Haftklebstoff aufgebracht wird und/oder dass es sich bei mindestens einem thermoplastischen Bindermaterial um einen Haftklebstoff handelt.

Für die Herstellung von Bändchengarnen werden bevorzugt Multifilamentgarne verwendet, in denen die Filamente nicht miteinander verbunden sind, um ein problemloses Aufspreizen des Multifilamentgarns zu gewährleisten.

Das Aufbringen des oder der Bindermaterialien kann auf verschiedenen Wegen erfolgen. In einer Ausführungsform kann das Bindermaterial oder ein Precursor dafür aus einer Polymerlösung in einem geeigneten Lösungsmittel aufgebracht werden. Das gespreizte Garn wird dann durch die Lösung geführt und in die Lage versetzt, das Bindermaterial aus der Flüssigkeit aufzunehmen. Durch Verdampfen des Lösemittels umschließt dann das Bindermaterial bzw. der Precursor dafür die Einzelfilamente des gespreizten Garns.

In einer Ausführungsform kann das Bindermaterial oder ein Precursor dafür aus einer Schmelze bzw. in reiner, flüssiger Form aufgebracht werden. Das gespreizte Garn wird dann durch die Flüssigkeit geführt und in die Lage versetzt, das Bindermaterial bzw. den Precursor dafür aufzunehmen. Das aufgenommene Material benetzt dann die Einzelfilamente des Garns. Bei einem thermoplastischen Bindermaterial werden so durch Abkühlen die Filamente aneinander gebunden.

In einer weiteren Ausführungsform kann das Bindermaterial bzw. ein Precursor dafür auch in Partikelform auf das gespreizte Garn aufgebracht werden. Hierbei ist eine Imprägnierung aus einer Partikelsuspension in Wasser oder einer anderen geeigneten Flüssigkeit möglich, durch die das gespreizte Garn hindurch geführt wird. Ebenfalls möglich ist eine Imprägnierung durch ein Polymerpulver, das zum Beispiel aus einer Wirbelschicht oder über Zerstäuberpistolen auf das gespreizte Garn aufgebracht wird. Wird das Bindermaterial in Partikelform auf das Garn aufgebracht, schließt sich anschließend mindestens ein Heizschritt an, in dem eventuelle Flüssigkeiten verdampft und die Partikel aufgeschmolzen sowie ggf. ein Precursor für Bindermaterialien zum eigentlichen Bindermaterial umgesetzt werden. Die Schmelze der Partikel legt sich dann um die Einzelfilamente des gespreizten Garns und bindet sie - ggf. nach dem Ausbilden des Bindermaterials aus dem Precursor - aneinander. Der mindestens eine Heizschritt kann dabei in einem Ofen, auf beheizten Galetten, durch eine Infraroheizung oder durch Kalandieren über ein beheiztes Walzenpaar oder ein beheiztes Walzentrio erfolgen.

In einer weiteren Ausführungsform kann ein Precursor für das Bindermaterial oder das Bindermaterial selbst auch in Tröpfchenform auf das Garn aufgebracht werden. Hierbei ist eine Imprägnierung aus einer Emulsion in Wasser oder einer anderen geeigneten Flüssigkeit möglich, durch die das Garn hindurch geführt wird. Ebenfalls möglich ist eine Imprägnierung durch Aufsprühen einer Flüssigkeit auf das Garn. An das Aufbringen in Tröpfchenform kann sich ein Heizschritt anschließen, in dem eventuelle Flüssigkeiten verdampft und der Precursor zum eigentlichen Bindermaterial umgesetzt wird. Die Tröpfchen konsolidieren sich zu einer Flüssigkeit, die sich um die Einzelfilamente des Garns legt und sie ggf. nach dem Ausbilden des Bindermaterials aus dem Precursor aneinander bindet. Der mindestens eine Heizschritt kann dabei in einem Ofen, auf beheizten Galetten, durch eine Infrarotheizung oder durch Kalandrieren über ein beheiztes Walzenpaar oder ein beheiztes Walzentrio erfolgen.

Unter einem Precursor für das Bindermaterial werden Stoffe verstanden, die durch einen anschließenden Verarbeitungsschritt wie Erhitzen oder Bestrahlen mit sichtbarem oder UV-Licht verfestigt werden und so das Bindermaterial bilden.

In einer Ausführungsform des erfindungsgemäßen Verfahrens wird das Aufwickeln der mittels Bindermaterial gebundenen Garne verdrehungsfrei durchgeführt.

In einer Ausführungsform wird zwischen dem Binden und dem Aufwickeln des Garns auf mindestens eine Seite des Garnes ein Haftklebstoff aufgebracht.

In einer Ausführungsform kann es sich bei dem Haftklebstoff um einen Haftklebstoff handeln, der auf quellbaren Acrylatkügelchen basiert. In einer Ausführungsform wird der Haftklebstoff in flüssiger, gelöster, dispergierter oder viskoser Form auf das Bändchengarn aufgebracht. Möglich ist dabei das Aufbringen aus einem Bad, durch das das Bändchengarn hindurch geführt wird, das Aufbringen über eine Übertragungswalze oder durch Aufsprühen. Der Haftklebstoff kann punktuell oder als geschlossene Schicht aufgebracht werden. Die Haftkraft des aufgebrachten Haftklebstoffs kann über die Menge oder die mit dem Haftklebstoff benetzte Fläche gesteuert werden.

Sofern der Haftklebstoff in gelöster oder dispergierter Form aufgebracht wird, kann optional das Lösungs- bzw. Dispersionsmittel durch Trocken z.B. in einem ggf. erwärmten Luftstrom und/oder durch Unterdruck entfernt werden.

In einer Ausführungsform kann das Aufbringen des Haftklebstoffs unmittelbar vor dem Aufwickeln des Bändchengarns erfolgen oder, sofern bereits Haftklebstoff aufgebracht wurde, unmittelbar vor dem Aufbringen des Haftklebstoffs wiederholt werden. Weiterhin ist es möglich, aus dem unmittelbar vor dem Aufwickeln aufgebrachten Haftklebstoff ggf. vorhandenes Lösungs- bzw. Dispersionsmittel nicht zu entfernen, um so die Haftung des Bändchengarns auf der Spule zu verbessern.

In einer weiteren Ausführungsform kann bereits auf das Bändchengarn aufgebrachter Haftklebstoff vor dem Aufwickeln durch Befeuchten mit Wasser oder einem anderen Lösungsmittel wie einem Alkohol wie Ethanol, Methanol, 1-Propanol oder 2-Propanol, einem Keton wie Aceton oder Methylethylketon, einem Alkan wie n-Hexan oder n-Heptan oder Petrolether aktiviert werden, um die Haftung des Bändchengarns auf der Spule zu verbessern.

In einer Ausführungsform des erfindungsgemäßen Verfahrens enthält das thermoplastische Bindermaterial einen Haftklebstoff oder es handelt sich bei dem thermoplastischen Bindermaterial um einen Haftklebstoff.

Die Anmeldung betrifft außerdem eine faserbasierte Verstärkung für einen Fahrzeugluftreifen beinhaltend ein erfindungsgemäßes Bändchengarn.

Die Anmeldung betrifft außerdem einen Airbag beinhaltend ein erfindungsgemäßes Bändchengarn.

**Patentansprüche**

1. Bändchengarn aufweisend

   o eine Oberseite und eine Unterseite,
   o Filamente,
   o sowie ein Bindermaterial,
   wobei das Bindermaterial zu einem wesentlichen Anteil thermoplastische Polymere enthält,
   wobei das Bindermaterial in der Ober- und/oder der Unterseite des Bändchengarns enthalten ist und wobei das Bindermaterial die Filamente aneinander bindet,
   **gekennzeichnet dadurch, dass**

   o die Oberseite und/oder die Unterseite des Bändchengarns einen Haftklebstoff aufweist.

2. Bändchengarn nach Anspruch 1, wobei die Filamente zu einem wesentlichen Anteil aus thermoplastischen Polymeren wie Polyamiden, Polyestern, Polyolefinen oder Mischungen daraus bestehen.

3. Bändchengarn nach einem oder mehreren der vorherigen Ansprüche, wobei die Filamente zu einem wesentlichen Anteil aus anorganischen Fasern wie Glasfasern, Basaltfasern, Kohlenstofffasern oder Metalldrähten bestehen.

4. Bändchengarn nach einem oder mehreren der vorherigen Ansprüche, wobei es sich bei dem Bindermaterial um thermoplastischen Copolyester, thermoplastischen Copolyamid oder Mischungen daraus handelt.

5. Bändchengarn nach einem oder mehreren der vorherigen Ansprüche, wobei der Haftklebstoff auf Acrylaten, Kautschuk oder Silikonen oder Mischungen daraus basiert.

6. Bändchengarn nach einem oder mehreren der vorherigen Ansprüche, wobei der Haftklebstoff so beschaffen ist, dass er zwischen zwei erfindungsgemäßen Bändchengarnen zu einer Klebeverbindung führt, die mit einer Krafteinwirkung von etwa 0,01 mN/tex zu lösen ist.

7. Bändchengarn nach einem oder mehreren der vorherigen Ansprüche, wobei der Haftklebstoff im Bindermaterial enthalten ist oder es sich beim Bindermaterial um einen Haftklebstoff handelt.

8. Bändchengarn nach einem oder mehreren der vorherigen Ansprüche, wobei der Haftklebstoff auf dem Bändchengarn mindestens eine Lage bildet.

9. Bändchengarn nach einem oder mehreren der vorherigen Ansprüche, wobei der Haftklebstoff quellbare Acrylatkügelchen enthält.

10. Bändchengarn nach einem oder mehreren der vorherigen Ansprüche, wobei der Haftklebstoff durch die Einwirkung von Licht, Luftsauerstoff oder durch das Verdampfen eines Lösungs- oder Quellmittels seine Haftkraft verliert.

11. Verfahren zur Herstellung eines Bändchengarns beinhaltend die Schritte

    a. Vorlegen von Filamenten,
    b. Spreizen der Filamente,
    c. Binden der Filamente durch Aufbringen eines oder mehrerer thermoplastischer Bindermaterialien, und
    d. Aufwickeln des gebundenen Garnes,
    **gekennzeichnet dadurch, dass**

    o auf der Ober- und/oder der Unterseite des Bändchengarns ein Haftklebstoff aufgebracht wird und/oder dass es sich bei mindestens einem thermoplastischen Bindermaterial um einen Haftklebstoff handelt.

12. Verfahren nach Anspruch 11, wobei der Haftklebstoff aus einem Bad oder über eine Walze auf das Garn aufgebracht oder auf das Garn aufgesprüht und anschließend getrocknet wird.

13. Verfahren nach Anspruch 11 oder 12, wobei der Haftklebstoff unmittelbar vor dem Aufwickeln aufgebracht wird.

14. Eine Verstärkung für einen Fahrzeugluftreifen beinhaltend ein Bändchengarn nach einem der Ansprüche 1 bis 10.

15. Ein Airbag beinhaltend ein Bändchengarn nach einem der Ansprüche 1 bis 10.

**Claims**

1. A tape yarn, having

    o an upper side and a lower side,
    o filaments,
    o and a binder material,
    wherein the binder material contains a substantial proportion of thermoplastic polymers, wherein the binder material is contained in the upper side and/or lower side of the tape yarn and wherein the binder material binds the filaments together,
    **characterised in that**

    o the upper side and/or lower side of the tape yarn has a pressure-sensitive adhesive.

2. The tape yarn according to claim 1, wherein the filaments consist of a substantial proportion of thermoplastic polymers such as polyamides, polyesters, polyolefins or mixtures thereof.

3. The tape yarn according to one or more of the preceding claims, wherein the filaments consist of a substantial proportion of inorganic fibres such as glass fibres, basalt fibres, carbon fibres or metal wires.

4. The tape yarn according to one or more of the preceding claims, wherein the binder material is a thermoplastic copolyester, thermoplastic copolyamide or mixtures thereof.

5. The tape yarn according to one or more of the preceding claims, wherein the pressure-sensitive adhesive is based on acrylates, rubber or silicones or mixtures thereof.

6. The tape yarn according to one or more of the preceding claims, wherein the pressure-sensitive adhesive is such that it results in an adhesive bond between two tape yarns according to the invention, which bond is to be released with a force of approximately 0.01 mN/tex.

7. The tape yarn according to one or more of the preceding claims, wherein the pressure-sensitive adhesive is contained in the binder material or the binder material is a pressure-sensitive adhesive.

8. The tape yarn according to one or more of the preceding claims, wherein the pressure-sensitive adhesive forms at least one layer on the tape yarn.

9. The tape yarn according to one or more of the preceding claims, wherein the pressure-sensitive adhesive contains swellable acrylate beads.

10. The tape yarn according to one or more of the preceding claims, wherein the pressure-sensitive adhesive loses its adhesive force due to the action of light, atmospheric oxygen or due to the evaporation of a solvent or swelling agent.

11. A method for producing a tape yarn, comprising the steps

    a. feeding filaments,
    b. spreading the filaments,
    c. binding the filaments by applying one or more thermoplastic binder materials, and
    d. winding up the bound yarns,
    **characterised in that**

    o a pressure-sensitive adhesive is applied to the upper side and/or lower side of the tape yarn and/or **in that** at least one thermoplastic binder material is a pressure-sensitive adhesive.

12. The method according to claim 11, wherein the pressure-sensitive adhesive is applied to the yarn from a bath or via a roller or is sprayed onto the yarn and then dried.

13. The method according to claim 11 or 12, wherein the pressure-sensitive adhesive is applied immediately before winding.

14. A reinforcement for a vehicle pneumatic tyre consisting of a tape yarn according to any one of claims 1 to 10.

**15.** An airbag consisting of a tape yarn according to any one of claims 1 to 10.

**Revendications**

**1.** Fil en forme de ruban présentant

    ◦ une face supérieure et une face inférieure,
    ◦ des filaments,
    ◦ ainsi qu'un matériau liant,

dans lequel le matériau liant contient une proportion substantielle de polymères thermoplastiques, dans lequel le matériau liant est contenu dans la face supérieure et/ou la face inférieure du fil en forme de ruban, et dans lequel le matériau liant relie les filaments entre eux, **caractérisé en ce que**

    ◦ la face supérieure et/ou la face inférieure du fil en forme de ruban présente un adhésif sensible à la pression.

**2.** Fil en forme de ruban selon la revendication 1, dans lequel les filaments sont constitués en proportion substantielle de polymères thermoplastiques tels que des polyamides, des polyesters, des polyoléfines ou des mélanges de ceux-ci.

**3.** Fil en forme de ruban selon une ou plusieurs des revendications précédentes, dans lequel les filaments sont constitués en proportion substantielle de fibres inorganiques telles que des fibres de verre, les fibres de basalte, les fibres de carbone ou les fils métalliques.

**4.** Fil en forme de ruban selon une ou plusieurs des revendications précédentes, dans lequel le matériau liant est du copolyester thermoplastique, du copolyamide thermoplastique ou des mélanges de ceux-ci.

**5.** Fil en forme de ruban selon une ou plusieurs des revendications précédentes, dans lequel l'adhésif sensible à la pression est à base d'acrylates, de caoutchouc ou de silicones ou de mélanges de ceux-ci.

**6.** Fil en forme de ruban selon une ou plusieurs des revendications précédentes, dans lequel l'adhésif est conçu pour conduire entre deux fils de bande selon l'invention à une liaison adhésive qui doit être détachée avec une force d'environ 0,01 mN/tex.

**7.** Fil en forme de ruban selon une ou plusieurs des revendications précédentes, dans lequel l'adhésif sensible à la pression est contenu dans le matériau liant ou le matériau liant est un adhésif.

**8.** Fil en forme de ruban selon une ou plusieurs des revendications précédentes, dans lequel l'adhésif sensible à la pression forme au moins une couche sur le fil en forme de ruban.

**9.** Fil en forme de ruban selon une ou plusieurs des revendications précédentes, dans lequel l'adhésif sensible à la pression contient des billes d'acrylate gonflables.

**10.** Fil en forme de ruban selon une ou plusieurs des revendications précédentes, dans lequel l'adhésif sensible à la pression perd sa force d'adhérence sous l'effet de la lumière, de l'oxygène atmosphérique ou de l'évaporation d'un solvant ou d'un agent gonflant.

**11.** Procédé de fabrication d'un fil en forme de ruban comportant les étapes suivantes

    a. présentation de filaments,
    b. écartement des filaments,
    c. liaison des filaments par application d'un ou plusieurs matériaux liants thermoplastiques, et
    d. enroulement du jeu lié,
    **caractérisé en ce que**

    ◦ un adhésif sensible à la pression est appliqué sur la face supérieure et/ou la face inférieure du fil en forme de ruban et/ou **en ce qu'**au moins un matériau liant thermoplastique est un adhésif sensible à la pression.

**12.** Procédé selon la revendication 11, dans lequel l'adhésif sensible à la pression est appliqué sur le fil à partir d'un bain ou à l'aide d'un rouleau ou pulvérisé sur le fil, et puis séché.

**13.** Procédé selon la revendication 11 ou la revendication 12, dans lequel l'adhésif sensible à la pression est appliqué juste avant l'enroulement.

**14.** Renfort pour un pneumatique de véhicule comportant un fil en forme de ruban selon l'une quelconque des revendications 1 à 10.

**15.** Coussin de sécurité gonflable comportant un fil en forme de ruban selon l'une quelconque des revendications 1 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013117728 A
- US 3461025 A
- JP 2003002990 A
- EP 0330980 A
- GB 868954 A
- WO 2020132663 A
- EP 2812471 A
- EP 3092112 A